# EUROPÄISCHE PATENTSCHRIFT

(11) **EP 2 467 301 B1**
(45) Veröffentlichungstag und Bekanntmachung des Hinweises auf die Patenterteilung: **10.08.2016**
(21) Anmeldenummer: 10724301.6
(22) Anmeldetag: 02.06.2010
(51) Int. Cl.: B65C 9/40

(54) **AUTOMATISCHES TESTVERFAHREN FÜR INSPEKTIONSEINRICHTUNG**
AUTOMATIC TEST METHOD FOR AN INSPECTION DEVICE
PROCÉDÉ DE TEST AUTOMATIQUE POUR UN DISPOSITIF D'INSPECTION

(30) Priorität: 18.08.2009 DE 102009037779
(43) Veröffentlichungstag der Anmeldung: 27.06.2012
(73) Patentinhaber: KHS GmbH, 44143 Dortmund (DE)
(72) Erfinder: PSCHICHHOLZ, Manfred, 59174 Kamen (DE)
(86) Internationale Anmeldenummer: PCT/EP2010/003364
(87) Internationale Veröffentlichungsnummer: WO 2011/020520

(56) Entgegenhaltungen:
- EP-A1- 1 281 446
- EP-A1- 2 186 736
- WO-A1-93/13879
- DE-A1- 3 324 449
- DE-C1- 4 302 656
- US-A1- 2005 263 443

## Beschreibung

Die Erfindung betrifft ein Testverfahren zur Überprüfung einer Inspektionseinrichtung, welche einer Funktionseinheit einer Muttereinheit zugeordnet ist.

Die DE 10 2004 005 994 A1 offenbart eine Etikettiermaschine. Diese weist eine Vorrichtung zum Zuführen von Etiketten und ein Etikettieraggregat auf. Das Etikettieraggregat besitzt einen Etikettenbehälter, eine Leimwalze, einen mit beleimbaren Entnahmesegmenten versehenen rotierbaren Träger, sowie einen Greifzylinder. So können beispielsweise Flaschen mit Etiketten versehen werden, wobei die Etikettiermaschine z.B. als Rundläufer, Linearmaschinen oder auch Horizontalläufer ausgebildet sein kann. Im Auslaufbereich der etikettierten Flaschen ist eine Etikettensitzkontrolleinrichtung angeordnet, mit welcher die gewünschte Anordnung der Etiketten auf den Flaschen überwacht wird. Denkbar ist, die Etiketten auf einen korrekten Sitz beispielsweise zu an den Flaschen angeordneten Gestaltungsmerkmalen (so genannte Embossings) zu überprüfen. Möglich ist auch, Hals- und Brustetiketten auf korrekte Ausrichtung zueinander oder auch zu den Gestaltungsmerkmalen zu überprüfen. Bei einer Änderung des Etikettensitzes außerhalb einer vorgebbaren Toleranzgrenze vermittelt die Etikettensitzkontrolleinrichtung entsprechende Signale zur Ansteuerung einer Korrektureinrichtung, welche auf die Etikettieraggregate einwirkt, so dass ein korrekter Etikettensitz erreichbar ist. Natürlich werden die mit einen nicht korrekt ausgerichteten Etikett versehenen Flaschen in einer Ausschleusvorrichtung aussortiert, was selbstverständlich auch über das entsprechend generierte Signal der Etikettensitzkontrolleinrichtung möglich ist.

Die DE 44 41 245 A1 offenbart ein Verfahren zum Kontrollieren von etikettierten Gefäßen. Die Kontrollvorrichtung ist in einer Etikettiermaschine integriert, und weist einen Laser-Entfernungsmesser auf. Mit dem Laser-Entfernungsmesser kann festgestellt werden, ob ein Behälter mit einem Etikett versehen ist oder nicht. Während eines aktiven Messintervalls trifft der vom Laser-Entfernungsmesser ausgehende Laserstrahl zuerst auf die Oberfläche einer vorbeibewegten Flasche und misst deren Entfernung von seinem feststehenden Gehäuse, welches somit den konstanten Bezugsort bildet. Sobald der Laserstrahl auf die Oberfläche des Etiketts trifft, ergibt sich eine sprunghafte Verringerung der momentan gemessenen Entfernung entsprechend der Dicke des Etiketts und gegebenenfalls des Leimfilms zwischen der Flasche und dem Etikett. Diese sprunghafte Abstandsänderung wird in einer Auswerteeinheit erfasst, und als Kriterium für das Vorhandensein eines Etiketts gewertet. Dementsprechend sendet die Auswerteeinheit kein Signal oder ein Gut-Signal an eine Sortiervorrichtung aus. Ist kein Etikett auf der Flasche vorhanden, wird auch kein sprunghafter Entfernungssprung detektierbar, so dass die Auswerteeinheit ein Fehlersignal an die Sortiervorrichtung abgibt, welche die entsprechende Flasche aussortiert. Als Hauptnachteil ist dabei anzusehen, dass die Kontrolleinrichtung lediglich feststellen kann, ob ein Etikett an der Flasche vorhanden ist oder nicht. Nicht feststellbar ist dagegen, ob das Etikett auch korrekt beispielsweise zu Gestaltungsmerkmalen ausgerichtet ist, oder Falten aufweist.

Die DE 10 2006 022 492 A1 offenbart ein Testbehältnis für eine Kontrolleinrichtung für Behältnisse, mit einer Vielzahl von ersten Markierungsringen die das Testbehältnis auf vorbestimmten, festen Höhen wenigstens abschnittsweise umgeben und einer Vielzahl von einer in Längsrichtung des Testbehältnisses verlaufenden Markierungslinien, wobei die ersten Markierungsringe jeweils in konstanten, vorgegebenen Abständen in der Längsrichtung des Testbehältnisses zueinander angeordnet sind, die Markierungslinien wenigstens einen Anteil der ersten Markierungsringe schneiden und die Markierungslinien in jeweils vorbestimmten Abständen in einer Umfangsrichtung des Testbehältnisses zueinander angeordnet sind. Damit soll eine vereinfachte Neujustage einer zu wechselnden Kamera in der Kontrollvorrichtung ermöglicht werden.

Beispielsweise werden Flaschen oder ähnliche Behälter mittels einer Füllvorrichtung mit einem Füllgut befüllt, um dann einer Etikettiermaschine zugeführt zu werden. Die Behälter werden in der Etikettiermaschine oder vorher beispielsweise bezogen auf Gestaltungsmerkmale (so genannte Embossings) ausgerichtet, so dass die Etiketten ausgerichtet zu den Gestaltungsmerkmalen auf den Behälter aufgebracht werden können. Die etikettierten Behälter werden erneut ausgerichtet, und an einer Inspektionsvorrichtung, welche als Etikettensitzkontrolle ausgebildet sein kann, vorbeigeführt bzw. transportiert. Erkennt die Etikettensitzkontrolle Behälter mit einem schlechten oder fehlerhaften Etikettensitz, wird ein Signal zum Ausschleusen erzeugt. Die ausgeschleusten Behälter, zum Beispiel Flaschen werden auf einem gesonderten Transporteur gelagert.

Selbstverständlich bedarf die Inspektionseinrichtung, zum Beispiel in der Ausgestaltung als Etikettensitzkontrolle einer Überprüfung auf korrekte Funktion. Dies kann zum Beispiel mit einer Überprüfung der ausgeschleusten Behälter geschehen. Dieses Vorgehen ist aber sehr aufwändig und unsicher, da insbesondere die Behälter, welche nicht ausgeschleust wurden, nur stichprobenartig überprüft werden können, da der Behälterfluss eine große Geschwindigkeit aufweist. Etikettiermaschinen zum Beispiel haben einen Durchlauf von mehr als 60.000 Behälter bzw. Flaschen pro Stunde.

WO 93/13879 offenbart ein Testverfahren einer Flascheninspektionsmaschine wobei Testflaschen aus einem Magazin eingeschleust werden können.

Die auf die Anmelderin zurück gehende und nach dem Anmeldetag der vorliegenden Patentanmeldung veröffentliche DE 10 2008 050 249 A1 befasst sich mit einem Testverfahren für Inspektionseinrichtungen, insbesondere für Etikettensitzkontrolleinrichtungen. Das hier beschriebene Testverfahren hat sich in der Praxis dahingehend vorteilhaft erwiesen, als die Inspektionseinrichtung zuverlässig auf deren korrekte Funktion hin überprüft werden kann. Dazu wird vorteilhaft eine individuell vorgegebene Anzahl Prüfbehälter erzeugt, welche an der Inspektionseinrichtung vorbeigeführt wird. Die Inspektionseinrichtung wird bei korrekter Funktion auch jeweils ein entsprechendes Signal zum Ausschleusen zumindest fehlerhafter Behälter an eine Aussortiervorrichtung übermitteln. Natürlich kann dabei eine Auswerteeinheit zwischengeschaltet sein. Erkennt die Inspektionseinrichtung alle fehlerhaften Behälter, bzw. werden alle fehlerhaften Prüfbehälter ausgeschleust, und belässt fehlerfreie Prüfbehälter in dem Behälterfluss, ist sichergestellt, dass die Inspektionseinrichtung korrekt funktioniert.

Die individuell vorgegebene Anzahl der Prüfbehälter wird gemäß der Lehre der DE 10 2008 050 249 A1 manuell erzeugt, was bedeutet, dass diese manuell in den Behälterfluss eingegeben werden. Wird das Prüfprogramm detektiert, wird zumindest die Etikettierfunktion ausgeschaltet. Bei dem automatischen Ablauf des Testverfahrens wird die Funktionseinheit bzw. das Etikettieraggregat automatisch abgeschaltet. Das Prüfprogramm kann regelmäßig, zum Beispiel täglich, vor jedem Schichtwechsel bzw. vor einem Sortenwechsel durchgeführt werden.

Als Nachteilig wird dabei empfunden, dass eine geringe Stichprobentiefe erreichbar ist. Denn das Prüfprogramm wird beispielsweise nur einmal pro Schicht durchlaufen. Manuelle Eingriffe können aber jeweils in einer erhöhten Fehlbedienung münden. Insbesondere die Frage der Produkthaftung spielt dabei eine Rolle, denn es muss ein sehr hoher Aufwand zur Dokumentation betrieben werden. Weiter wird es als nachteilig empfunden, dass z.B. die Etikettierfunktion abgeschaltet ist, wenn das Prüfprogramm detektiert wird. Ein Abschalten z.B. der Etikettierfunktion geht aber gleichzeitig mit einer Produktionsunterbrechung bei dem Test einher, woraus ein Effizienzverlust der Anlage resultiert.

Der Erfindung liegt daher die Aufgabe zugrunde, ein Testverfahren zur Überprüfung einer Inspektionseinrichtung anzugeben, mit welchem z.B. die Effektivität der Behandlungsanlage trotz des Durchführens des Testverfahrens weniger negativ beeinflusst wird, wobei gleichzeitig eine Dokumentation des jeweils durchgeführten Tests mit weniger Aufwand erreichbar ist.

Erfindungsgemäß wird die Aufgabe durch ein Testverfahren mit den Merkmalen des Anspruchs 1 gelöst, umfassend zumindest die Schritte: Erzeugen einer vorgegebenen Anzahl von Behältern, so genannten Prüfbehältern durch die Funktionseinheit selbst, indem der Funktionseinheit ein Steuersignal zum Erzeugen eines markanten Elementes zugeleitet wird; Vorbeiführen der Prüfbehälter an der Inspektionseinrichtung, welche die Prüfbehälter detektiert und idealerweise ein Steuersignal erzeugt.

Mit der Erfindung kann die Inspektionseinrichtung zuverlässig auf deren korrekte Funktion hin überprüft werden, ohne dass es eines Bedienereingriffs bedarf. Zudem kann das Testverfahren durchgeführt werden, ohne dass die Funktionseinheit ausgeschaltet werden muss. Da die Überprüfung der Inspektionseinrichtung vollautomatisch abläuft, wird ein erheblich verringerter Dokumentationsaufwand erwartet, da alle Schritte automatisch erfolgen und jeder einzelner Schritt entsprechend automatisch an geeigneter Stelle zusammengeführt und automatisch abgelegt bzw. gespeichert wird. Die Dokumentation ist zu beliebiger Zeit abrufbar. Natürlich ist auch das automatische Testverfahren nicht an bestimmte Zeitpunkte, wie z.B. Schichtwechsel gebunden, sondern kann vorteilhaft zu jeder beliebigen Zeit, vorzugsweise zufallsgesteuert durchgeführt werden.

Wesentlich ist dabei, dass die vorgegebene Anzahl der Prüfbehälter durch die Funktionseinheit selbst erzeugt wird, so dass eine automatische Selbstüberwachung erreichbar ist. Beispielhaft kann die Muttereinheit als Behälterbehandlungsanlage, z.B. in der Ausgestaltung als Flaschenbehandlungsanlage ausgeführt sein, welche als Funktionseinheiten z.B. einen Füller, einen Etikettierer und/oder einen Verschließer aufweist, um nur einige Funktionseinheiten beispielhaft zu nennen.

Als markantes Element bzw. als definierter Fehler kann zum Beispiel in der Funktionseinheit Füller eine von der Sollmenge abweichende Menge in einen Behälter eingefüllt werden. In der Funktionseinheit Etikettierer kann als definierter Fehler z.B. ein schief sitzendes Etikett aufgebracht werden. In der Funktionseinheit Verschließer kann zum Beispiel als definierter Fehler ein nicht vollständiges Verschließen erzeugt werden. Als definierte Fehler können so z.B. ein Unterfüllen, ein Überfüllen, eine Lageungenauigkeit des Etiketts bzw. ein fehlendes Etikett, ein fehlender Verschluss, ein zu hoher Verschlusssitz, ein zu niedriger Verschlusssitz und/oder ein fehlerhaft sitzender Kronkorken erzeugt werden, um nur einige beispielhafte, markante Elemente bzw. definierte Fehler zu nennen.

Hierbei liegt der Erfindung die Erkenntnis zugrunde, dass die jeweiligen Funktionseinheiten ohnehin mit der Muttereinheit bzw. mit deren Kontrolleinheit vernetzt sind. Die Kontrolleinheit kann zum Beispiel die Funktionseinheit Füller ansteuern, wobei elektronische Füller einzelne Ventile ansteuern können, welche den definierten Fehler erzeugen. Des Weiteren sind bei der Funktionseinheit Etikettierer servoangetriebene Stationen gezielt desynchronisierbar. Hierbei kann zum Beispiel der Etikettenvortrieb an der Spenderstation oder der Drehwinkel des Transporttellers für den Flaschenträger gezielt angesteuert werden. Auch die Funktionseinheit Verschließer weist servoangetriebene Verschliesselemente auf, welche gezielt angesteuert werden können.

Das Erzeugen des definierten Fehlers wird natürlich nur während des Testverfahrens durchgeführt. Vorteilhaft ist dabei, dass die Kontrolleinheit mit der Fehler erzeugenden Funktionseinheit vernetzt ist, so dass die Kontrolleinheit diesen Fehler kennt bzw. abspeichert. Die der Funktionseinheit nach geschaltete Inspektionseinrichtung sollte den definierten Fehler erkennen, und ein Aussortiersignal an die entsprechende Aussortiervorrichtung senden, bzw. es wird ein Signal zum Ausschleusen des betreffenden Prüfbehälters generiert. Da die Kontrolleinheit aber den Prüfbehälter "kennt" und vorzugsweise auch mit der Aussortiervorrichtung vernetzt ist, kann so überprüft werden, ob die Inspektionseinrichtung korrekt arbeitet. Denn erreicht der fehlerhafte Prüfbehälter die Sortiervorrichtung, und verbleibt im Behälterfluss, wird also nicht aussortiert, ist dies ein Anzeichen für eine Fehlfunktion der Inspektionseinrichtung. Dies wird entsprechend angezeigt, beispielsweise mittels akustischer Warntöne oder gar einem Nothalt zumindest der betreffenden Funktionseinheit, so dass die betreffende Inspektionseinrichtung entsprechend manuell überprüft werden kann. Selbstverständlich liegt es durchaus im Sinne der Erfindung das vollautomatische Testverfahren zur Überprüfung der Inspektionseinrichtung auch mit Gut-Behältern durchzuführen. Hierbei wird das Testverfahren gestartet, und kein definierter Fehler bzw. markantes Element durch die Funktionseinheit selbst erzeugt. Dieser Prüfbehälter wird also z.B. mit korrekt sitzendem Etikett an der Inspektionseinrichtung vorbeigeführt. Da die Kontrolleinheit die Position des Prüfbehälters in dem Behälterfluss "kennt" erwartet diese, wenn der Prüfbehälter die Aussortiervorrichtung erreicht ein Gut-Signal, also ein Signal, welches den Prüfbehälter in dem Behälterfluss belässt. Wird der Prüfbehälter dagegen aussortiert, wird dies wiederum entsprechend angezeigt.

Wesentlich ist auch, dass die jeweilige Funktionseinheit, deren zugeordnete Inspektionseinheit überprüft werden soll, nicht ausgeschaltet wird. Dies weil die Funktionseinheit den definierten Fehler oder den guten Prüfbehälter selbst erzeugt. Als vorgegebene Anzahl bzw. zufallsgesteuerte Anzahl von Prüfbehältern kann ein einziger oder mehrere Prüfbehälter von der Funktionseinheit selbst erzeugt werden, in dem das entsprechende Signal an diese übermittelt wird. Ist die vorgegebene Anzahl an Prüfbehältern erzeugt, kann die Funktionseinheit direkt wieder in ihren normalen Modus überführt werden, in dem diese das entsprechende Signal erhält. Bisher wurde die vorgegebene Anzahl der Prüfbehälter stromauf der Funktionseinheit manuell in den Behälterfluss eingeführt, wobei die Funktionseinheit abgeschaltet wurde. Hierbei durchlaufen die Prüfbehälter einen relativ langen Weg, bis diese die zu überprüfende Inspektionseinheit erreichen, was natürlich eine erhebliche Zeitdauer in Anspruch nimmt während welcher die Funktionseinheit ausgeschaltet ist. Mit der Erfindung dagegen entfällt dieses einlaufseitige Einführen der Prüfbehälter in den Behälterfluss, so dass das Testverfahren von relativ kurzer Dauer ist, was natürlich von der zufälligen Anzahl der Prüfbehälter abhängt. Der Prüfbehälter wird bevorzugt zufallsgesteuert aus einem zufälligen Behälter in dem Behälterfluss durch die Funktionseinheit selbst erzeugt.

Vorteilhaft wird also eine vorgegebene Anzahl Prüfbehälter erzeugt, welche an der Inspektionseinrichtung vorbeigeführt werden. Die Inspektionseinrichtung sollte bei korrekter Funktion auch jeweils ein entsprechendes Signal zum Ausschleusen zumindest fehlerhafter Behälter an die Aussortiervorrichtung übermitteln. Natürlich kann dabei eine Auswerteeinheit zwischengeschaltet sein. Erkennt die Inspektionseinrichtung alle fehlerhaften Behälter, bzw. werden alle fehlerhaften Prüfbehälter ausgeschleust, und belässt fehlerfreie Prüfbehälter in dem Behälterfluss, ist sichergestellt, dass die Inspektionseinrichtung korrekt funktioniert.

In Günstiger Ausgestaltung ist vorgesehen, dass die Inspektionseinheit den oder die Prüfbehälter inspiziert und einen Messwert generiert, mittels welchem die Anzahl der Prüfbehälter mit definiertem Fehler bestimmbar ist, wobei mittels des Messwertes die Abweichung zwischen dem Soll-Messwert und dem Ist-Messwert bestimmbar ist, wobei idealerweise der Soll-Messwert die vorgegebene Anzahl von Prüfbehältern mit definiertem Fehler, also die in der Kontrolleinheit abgelegte Anzahl von Prüfbehältern ist und der Ist-Messwert, die von der Inspektionseinrichtung gemessene oder erfasste Anzahl der Prüfbehältern mit definiertem Fehler ist.

Zweckmäßig im Sinne der Erfindung kann vorgesehen sein, wenn die Inspektionseinrichtung ein Signal zum Ausschleusen mindestens der Prüfbehälter mit definiertem Fehler generiert.

Selbstverständlich kann bei jedem Testverfahren bzw. Prüfprogramm eine unterschiedliche Anzahl fehlerhafter Prüfbehälter durch die Funktionseinheit selbst erzeugt werden, was mit dem Begriff der zufallsgesteuerten Anzahl im Sinne der Erfindung gemeint ist. Des Weiteren ist vorteilhaft, wenn die jeweiligen Inspektionseinrichtungen gleichzeitig überprüft werden. Zum Beispiel könnte die Funktionseinheit Etikettierer ein zu so genannten Embossings nicht ausgerichteten Etikettensitz erzeugen, wobei gleichzeitig an demselben Prüfbehälter eine Unterfüllung von der betreffenden Funktionseinheit Füller erzeugt wird, wobei zu dem die Funktionseinheit Verschließer ein inkorrektes Verschließen desselben Prüfbehälters erzeugt. Dies ist möglich, da die Kontrolleinheit die Lage des betreffenden Prüfbehälters "kennt", und so die jeweiligen Funktionseinheiten entsprechend ansteuern und verifizieren kann, ob die jeweilige Inspektionseinrichtung das entsprechende Steuersignal generiert. Vorteilhaft wird so ein Prüfbehälter von der jeweiligen Funktionseinheit mit dem jeweils definiertem Fehler erzeugt, so dass die Anzahl der auszuschleusenden Prüfbehälter reduziert ist, was sich vorteilhaft auf verringerten Ausschuss und erhöhte Effizienz auswirkt. Natürlich können auch unterschiedliche Prüfbehälter von der jeweiligen Funktionseinheit selbst erzeugt werden, so dass quasi ein Prüfbehälterfluss erzeugt wird.

Wesentlich ist aber auch, dass das Testverfahren zufallsgesteuert durchgeführt wird. Dies bedeutet, dass alle oder ein Teil der Inspektionseinheiten zufallsgesteuert gleichzeitig, oder zu zufälligen Zeitpunkten unabhängig von einander überprüft werden können. Werden alle oder ein Teil der Inspektionseinheiten zufallsgesteuert gleichzeitig überprüft, kann so vorgegangen werden, dass bei der stromauf ersten Funktionseinheit bzw. Inspektionseinheit begonnen wird. Dies bedeutet, dass wenn die stromauf erste Funktionseinheit zum Erzeugen des markanten Elementes bzw. des definierten Fehlers entsprechend zufällig angesteuert wird, die Zufallsteuerung der anderen außer Kraft gesetzt wird, und zum Erzeugen des definierten Fehlers angesteuert werden können. Eine abweichende Reihenfolge, beispielsweise nach dem Zufallsprinzip ist in gleicher Weise möglich.

Die fehlerhaften Prüfbehälter sollten bei korrekter Funktion der jeweiligen Inspektionseinrichtung von dieser erkannt werden, so dass in bekannter Weise ein Signal zum Ausschleusen der fehlerhaften Behälter generiert wird.

Zur weiteren Kontrolle der Inspektionseinrichtung bzw. der Etikettensitzkontrolle kann natürlich auch vorgesehen sein, wie bereits oben angedeutet, zumindest einen Gut-Behälter als Prüfbehälter an der Inspektionseinrichtung vorbeizuführen, welcher dann bei korrekter Funktion der Inspektionseinrichtung nicht ausgeschleust werden sollte, oder bevorzugt ausgeschleust wird, aber als in Ordnung gekennzeichnet wird.

In bevorzugter Ausführung des Verfahrens kann vorgesehen sein, einen Gesamtprüfbehälterfluss von der jeweiligen Funktionseinheit und/oder von allen und/oder von einem Teil der Funktionseinheiten zu erzeugen, welcher aus einer zufällig vorgegebenen Anzahl fehlerhafter und nicht fehlerhafter Prüfbehälter gebildet ist, also dass ein Gesamtprüfbehälterfluss z.B. aus korrekt etikettierten und nicht korrekt etikettierten, und/oder aus unter- oder überfüllten und korrekt gefüllten, und/oder aus inkorrekt und korrekt verschlossenen Prüfbehältern erzeugt wird. Dieser Gesamtprüfbehälterfluss wird vollständig an den Inspektionseinrichtungen vorbeigeführt. Bei korrekter Funktion der jeweiligen Inspektionseinrichtung verbleiben dabei die jeweils fehlerfreien Prüfbehälter in dem Prüfbehälterfluss, wobei die fehlerhaften Prüfbehälter ausgeschleust werden. Natürlich können auch hier die fehlerfreien Prüfbehälter ausgeschleust werden, dann aber wiederum als korrekt gekennzeichnet werden.

Mit der Erfindung wird ein Testverfahren zur Selbstkontrolle einer Inspektionseinrichtung bzw. in der bevorzugten Ausführung als Etikettensitzkontrolleinrichtung bereitgestellt mit welchem eine Überprüfung dieser auf korrekte Funktion zufällig durchführbar ist, wobei natürlich mehrere Testdurchläufe z.B. pro Schicht denkbar sind. Die jeweilige Inspektionseinrichtung kann dabei in bevorzugter Ausführung zusätzlich jeweils mit einem Inspektionsbildschirm verbunden sein, so dass unmittelbar nach passieren der Behälter an der Inspektionseinrichtung vorbei das Ergebnis sichtbar ist, wobei gleichzeitig unmittelbar eine Aussage über eine korrekte Funktion der Inspektionseinrichtung getroffen werden kann. Wesentlich ist dabei zudem, dass nicht nur eine visuelle Kontrolle möglich ist. Denn die Position des mit dem definierten Fehler versehenen Prüfbehälters bzw. des Fehlers ist wie oben gesagt "bekannt", so dass vorteilhaft eine automatische Selbstüberwachung zur Verfügung gestellt wird. Bei dieser Bedarf es keinerlei Bedienereingriffs, was natürlich nicht nur die Bedienung selbst sondern auch erhebliche Bedienerkosten vermeidet. Ein nicht zu unterschätzender Vorteil ist die stets gleichartige und gleichförmige Überprüfung einer Qualität, bei der die Fehlerquellen, die durch die Bedienung entstehen, ausgeschossen sind. Es erfolgt eine vollautomatische Durchführung, ohne Eingriff eines Bedieners.

Das Testverfahren zeichnet sich dadurch aus, dass es eindeutige und dokumentierte Regeln für die Methode und die Testergebnisse erlaubt, die eine Qualitätskontrolle im Sinne einer Produkthaftung sicherstellen oder zumindest stark vereinfachen.

Nach dem der Prüfbehälter von der Funktionseinheit selbst erzeugt wurde, wird diese wieder auf ihre ursprüngliche Funktion automatisch zurückgestellt.

Die Erfindung eignet sich in bevorzugter Anwendung für jegliche Inspektionsmaschinen bzw. -einrichtungen und Überwachungsmaschinen. Insofern ist das erfindungsgemäße Testverfahren z.B. an Etikettiermaschinen für die Prüfung der Inlabeler Etikettensitz- und Embossingallignement-Kontrolle durchführbar, so dass ein Betreiber der Etikettiermaschine stets eine Kontrolle durchführen kann, ob diese korrekt funktionieren, oder ob beispielsweise Wartungsarbeiten und/oder Einstellmaßnahmen erforderlich sind. Insbesondere ist das erfindungsgemäße Testverfahren auch an anderen Inspektionseinrichtungen anwendbar, um diese auf korrekte Funktion mittels einer vorgegebenen Anzahl von Schlecht-Behälter (und Gut-Behältern) zu überprüfen.

Die Vorteile der Erfindung lassen sich z.B. an lediglich beispielhaft genannten und nicht beschränkend wirkenden Daten festlegen, wozu die Flussdiagramme A und B dienen sollen. Flussdiagramm A zeigt ein Testverfahren nach dem Stand der Technik. Flussdiagramm B zeigt ein Vorgehen nach der Erfindung. Beide Flussdiagramme A und B sind nebeneinander dargestellt, um aufzuzeigen, dass mit dem erfindungsgemäßen Vorgehen erhebliche Zeit und damit Kosten eingespart werden.

In Flussdiagramm A wird das Verfahren bei Block 1 gestartet, indem von einem Bediener oder von einem Labor eine individuell vorgegebene Anzahl an Prüfbehältern erzeugt wird. Hierzu wird beispielhaft eine Herstellzeit von drei Minuten angenommen. Bei Block 2 wird das Testverfahren gestartet. Hierzu transportiert der Bediener die Prüfbehälter z.B. zur Etikettiermaschine. Während dieser beispielhaften Dauer von fünf Minuten ist der Bediener an der beispielhaften Etikettiermaschine nicht verfügbar. Das Testverfahren wird gestartet, indem die Prüfbehälter manuell in dem Behälterfluss eingesetzt werden. Bei Block 3 wird ein markierter Prüfbehälter vor den Prüfbehältern eingesetzt, so dass der Start des Prüfprogramms verifizierbar ist (dies wurde in der DE 10 2008 050 249 A1 umfassend beschrieben, die als hier umfänglich offenbart gilt). Für diesen Schritt 3 werden beispielhaft 30 Sekunden angesetzt, in denen das Risiko der Produktionsstörung oder -unterbrechung usw. erheblich sein kann. In Block 4 soll der Prüfbehälter von der Sensorik erkannt werden, wobei das Risiko einer geringen Sensorik bestehen kann. In Block 5 wird der erkannte Prüfbehälter in ein Register eingetragen. In Block 6 wird der Prüfbehälter gemessen und zwangsausgeleitet, wobei der Prüfbehälter in Block 7 entsorgt wird. Die Blöcke 4 bis 7 sind in einer Zeitdauer von angenommen 30 Sekunden durchlaufen. Zusammen wird bei einem Testverfahren nach dem Stand der Technik eine Zeitdauer von neun Minuten benötigt. Während dieser Zeitdauer ist der Bediener also mit zu seinen eigentlichen Aufgaben artfremden Tätigkeiten beschäftigt.

In Flussdiagramm B nach der Erfindung dagegen, wird zum Start der Überprüfung der Inspektionseinrichtung in Block 8 ein Sollfehler an einem zufällig aus dem Behälterfluss entnommenen Behälter von der Funktionseinheit selbst erzeugt, so dass der Prüfbehälter gebildet ist. Der Sollfehler entsteht durch entsprechende Anweisung (Signal) an die Funktionseinheit. Die Lage, also der Ort und der Fehler ist dabei eindeutig. Im Unterschied zu Block 1 aus Diagramm A wird hier kein Zeitverlust generiert, da die Erzeugung des Sollfehlers automatisch von der Funktionseinheit selbst geschieht. In Block 9 startet das System selbstständig und vollautomatisch mit seinem Prüfzyklus. In Block 10 wird der Prüfbehälter gemessen und zwangsausgeleitet. In Block 11 wird der Prüfbehälter entsorgt. Die Blöcke 10 und 11 sind direkt benachbart zu den Blöcken 6 und 7 des Diagramms A gezeigt, da in diesen dieselben Schritte ausgeführt werden. Angenommen wird hier wie zu Diagramm A eine Zeitdauer von 30 Sekunden. Erkennbar ist, dass im Diagramm B keine analogen Blöcke zu den Blöcken 3, 4 und 5 vorhanden sind. Insofern ergibt sich aufgrund des Wegfalls der ursprünglichen Schritte gemäß den Blöcken 3 bis 5 im Diagramm B ein Zeitvorteil von 30 Sekunden. Wesentlich ist aber, dass auch in den Blöcken 8 und 9 keine Bedienerzeit anfällt, da hier vollautomatisch vorgegangen wird. Insofern ergibt sich hier ein Vorteil von drei Minuten bezogen auf Block 1 des Diagramms A und ein Zeitvorteil von fünf Minuten bezogen auf Block 2 des Diagramms A. Insgesamt ergibt sich in Diagramm B ein Gesamtzeitgewinn von 8,5 Minuten (=3+5+0,5) bezogen auf Diagramm A. Bei einem angenommenen Stundenlohn von 40€ ergäbe sich so ein Vorteil von ungefähr 3400€ pro Jahr an eingesparten Bedienerkosten. Andererseits könnten anstelle von bisher drei durchgeführten Überprüfungen nach dem Diagramm A gemäß dem Vorgehen nach dem Diagramm B 17 (siebzehn) Testverfahren durchgeführt welche die selben Kosten generieren wie die drei Überprüfungen gemäß dem Vorgehen nach dem Diagramm A. Damit wird bei dem erfindungsgemäßen Vorgehen nach Diagramm B eine entsprechend höhere Stichprobentiefe bei gleichen Kosten erreicht, wobei eine einfache und eindeutige Dokumentation erstellt werden kann. Wenn die Inspektionseinheit nicht korrekt funktioniert, wird automatisch eine Fehlermeldung generiert, was zu erheblich zeitreduzierter Fehlerwahrnehmung bzw. -verfolgung führt, woraus eine kürzere Reaktionszeit entsteht. Wesentlich ist auch, dass bei dem erfindungsgemäßen Vorgehen die Produktion nicht unterbrochen wird, d.h. der Effizienzverlust ist geringer, da die Funktionseinheit nicht abgeschaltet wird, wenn das Testverfahren durchlaufen wird.

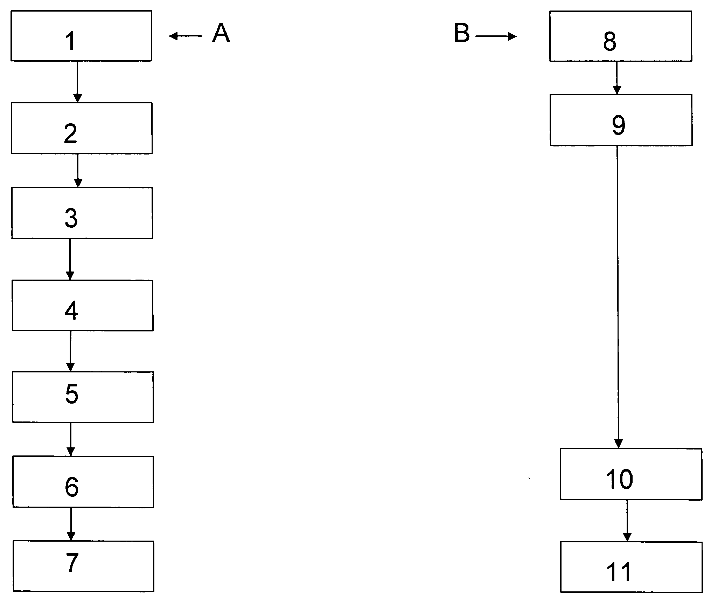

## Patentansprüche

1. Testverfahren zur Überprüfung einer Inspektionseinrichtung welche einer Funktionseinheit, wie z.B. ein Füller, eine Etikettiermaschine oder ein Verschliesser, einer Behälterbehandlungsanlage zugeordnet ist, wobei zumindest die folgenden Schritte automatisch erfolgen:
Erzeugen einer Anzahl von Behältern, so genannten Prüfbehältern mit definiertem Fehler und gegebenenfalls nicht definiertem Fehler, von der Funktionseinheit selbst, indem der Funktionseinheit ein Steuersignal zum Erzeugen eines markanten Elementes zugeleitet wird;
Vorbeiführen dieser Prüfbehälter an der Inspektionseinrichtung, welche die Prüfbehälter detektiert und ein entsprechendes Steuersignal erzeugt.

2. Testverfahren nach Anspruch 1, **dadurch gekennzeichnet, dass** die Prüfbehälter zufallsgesteuert erzeugt werden, wobei das Testverfahren zu einem zufallsgesteuerten Zeitpunkt durchgeführt wird.

3. Testverfahren nach einem der vorhergehenden Ansprüche, **dadurch gekennzeichnet, dass** die Behälterbehandlungsanlage als Flaschenbehandlungsanlage ausgeführt ist, die als Funktionseinheit einen Füller, eine Etikettiermaschine und/oder einen Verschließer aufweist.

4. Testverfahren nach einem der vorhergehenden Ansprüche, **dadurch gekennzeichnet, dass** der Prüfbehälter als markantes Element bzw. als definierten Fehler eine von der einzufüllenden Sollmenge abweichende Füllmenge aufweist.

5. Testverfahren nach einem der vorhergehenden Ansprüche, **dadurch gekennzeichnet, dass** der Prüfbehälter als markantes Element bzw. als definierten Fehler ein fehlerhaft aufgebrachtes Etikett oder gar kein Etikett aufweist.

6. Testverfahren nach einem der vorhergehenden Ansprüche, **dadurch gekennzeichnet, dass** der Prüfbehälter als markantes Element bzw. als definierten Fehler einen fehlerhaften aufgebrachten Verschluss oder gar keinen Verschluss aufweist.

7. Testverfahren nach einem der vorhergehenden Ansprüche, **dadurch gekennzeichnet, dass** die Behälterbehandlungsanlage bzw. deren Kontrolleinheit mit der jeweiligen Funktionseinheit bzw. mit den Funktionseinheiten vernetzt ist.

8. Testverfahren nach einem der vorhergehenden Ansprüche, **dadurch gekennzeichnet, dass** die Anzahl an Prüfbehältern zufallsgesteuert ist, wobei ein einziger oder mehrere Prüfbehälter mit dem markanten Element bzw. dem definierten Fehler von der Funktionseinheit selbst erzeugt wird.

9. Testverfahren nach einem der vorhergehenden Ansprüche, **dadurch gekennzeichnet, dass** die Funktionseinheit während der Überprüfung der Inspektionseinrichtung nicht abgeschaltet wird.

10. Testverfahren nach Anspruch 8, **dadurch gekennzeichnet, dass** die zufallsgesteuerte Anzahl von Prüfbehältern an der Inspektionseinrichtung vorbeigeführt werden, welche ein Signal zum Ausschleusen von jeweils fehlerhaften Prüfbehältern generiert.

11. Testverfahren nach einem der vorhergehenden Ansprüche, **dadurch gekennzeichnet, dass** eine zufallsgesteuerte Anzahl von Prüfbehälter ohne markantem Element bzw. definiertem Fehler an der Inspektionseinrichtung vorbeigeführt werden, welche in dem Behälterfluss verbleiben.

12. Testverfahren nach einem der vorhergehenden Ansprüche, **dadurch gekennzeichnet, dass** ein Gesamtprüfbehälterfluss von der bzw. den Funktionseinheiten selbst erzeugt wird, welcher eine zufallsgesteuerte Anzahl fehlerhafter und fehlerfreier Prüfbehälter aufweist, wobei der Gesamtprüfbehälterfluss an der jeweiligen Inspektionseinrichtung vorbeigeführt wird, wobei diese jeweils ein Signal zum Ausschleusen der fehlerhaften Prüfbehälter erzeugt, wobei die fehlerfreien Prüfbehälter in dem Prüfbehälterfluss verbleiben

13. Testverfahren nach einem der vorhergehenden Ansprüche, **dadurch gekennzeichnet, dass** die Funktionseinheit nach Erzeugen der zufallsgesteuerten Anzahl von Prüfbehältern mit dem markanten Element bzw. mit dem definierten Fehler, automatisch auf ihre normale Funktion zurückgestellt wird.

14. Testverfahren nach einem der vorhergehenden Ansprüche, **dadurch gekennzeichnet, dass** bei Fehlererkennung automatisch Maßnahmen eingeleltet werden, um den Fehler zu beheben und um möglichen Schaden zu minimieren

15. Testverfahren nach einem der vorhergehenden Ansprüche, **dadurch gekennzeichnet, dass** bei Fehlererkennung automatische eine Information zur Fehlerbehebung und zu der automatisch eingeleiteten Maßnahme erfolgt.

## Claims

1. Test method for examining an inspection device, which is associated with a functional unit, such as a filler, a labelling machine, or a closer, of a container handling system, wherein at least the following steps occur automatically:
- producing a number of containers, referred to as test containers, with defined faults and, as appropriate, undefined faults, by the functional unit itself, in that a control signal is sent to the functional unit for producing a distinctive element;
- leading these test containers past the inspection device, which detects the test containers and produces a corresponding control signal.

2. Test method according to claim 1, **characterised in that** the test containers are randomly controlled, wherein the test method is carried out at a randomly controlled point of time.

3. Test method according to any one of the preceding claims, **characterised in that** the container handling system is configured as a bottle handling system, which comprises, as a functioning unit, a filler, a labelling machine, and/or a closer.

4. Test method according to any one of then preceding claims, **characterised in that** the test container comprises, as a distinctive element, or, respectively, as a defined fault, a filling quantity which deviates from the reference quantity which is to be filled.

5. Test method according to any one of the preceding claims, **characterised in that** the test container comprises, as a distinctive element or defined fault, a defectively applied label or no label at all.

6. Test method according to any one of the preceding claims, **characterised in that** the test container comprises, as a distinctive element or defined fault, a defectively applied closure or no closure at all.

7. Test method according to any one of the preceding claims, **characterised in that** the container handling system or its control unit respectively is networked with the respective functioning unit or functioning units.

8. Test method according to any one of the preceding claims, **characterised in that** the number of test containers is randomly controlled, wherein one single test container or a plurality of test containers with the distinctive element or defined fault is or are produced by the functioning unit itself.

9. Test method according to any one of the preceding claims, **characterised in that** the functioning unit is not switched off during the examination by the inspection device.

10. Test method, according to claim 8, **characterised in that** the randomly controlled number of test containers are led past the inspection device, which generates a signal for discharging the respective faulty test containers.

11. Test method according to any one of the preceding claims, **characterised in that** a randomly controlled number of test containers without distinctive elements or defined faults are led past the inspection device, which then remain in the container flow.

12. Test method according to any one of the preceding claims, **characterised in that** a total test container flow is produced by the functioning unit(s) itself/themselves, which comprises a randomly controlled number of faulty and fault-free test containers, wherein the total test container flow is led past the respective inspection device, wherein this produces in each case a signal for discharging the defective test containers, wherein the fault-free test containers remain in the test container flow.

13. Test method according to any one of the preceding claims, **characterised in that** the functioning unit, after producing the randomly controlled number of test containers with the distinctive element or the defined fault, switches back automatically to its normal function.

14. Test method according to any one of the preceding claims, **characterised in that**, in the event of a fault being detected, measures are automatically initiated to rectify the fault and to minimize possible damage.

15. Test method according to any one of the preceding claims, **characterised in that**, in the event of a fault being detected, information is automatically issued with regard to the rectification of the fault and the automatically initiated measure.

## Revendications

1. Procédé de test servant à vérifier un dispositif d'inspection, qui est associé à une unité fonctionnelle, telle qu'une remplisseuse, une étiqueteuse ou une capsuleuse, d'une installation de manutention de contenant, sachant que sont effectuées automatiquement au moins les étapes suivantes consistant à:
produire un nombre donné de contenants, à savoir des contenants faisant l'objet d'un contrôle présentant un défaut défini et, éventuellement, un défaut non défini, par l'unité fonctionnelle elle-même, un signal de commande servant à produire un élément distinctif étant acheminé à l'unité fonctionnelle ;
faire défiler lesdits contenants faisant l'objet d'un contrôle le long du dispositif d'inspection, qui détecte les contenants faisant l'objet d'un contrôle et produit un signal de commande correspondant.

2. Procédé de test selon la revendication 1, **caractérisé en ce que** les contenants faisant l'objet d'un contrôle sont produits par une commande aléatoire, sachant que le procédé de test est effectué à un moment de manière aléatoire.

3. Procédé de test selon l'une quelconque des revendications précédentes, **caractérisé en ce que** l'installation de manutention de contenant est réalisée sous la forme d'une installation de manutention de bouteilles, laquelle présente, en tant qu'unité fonctionnelle, une remplisseuse, une étiqueteuse et/ou une capsuleuse.

4. Procédé de test selon l'une quelconque des revendications précédentes, **caractérisé en ce que** le contenant faisant l'objet d'un contrôle présente en tant qu'élément distinctif ou en tant que défaut défini une quantité de remplissage divergeant de la quantité théorique à transvaser.

5. Procédé de test selon l'une quelconque des revendications précédentes, **caractérisé en ce que** le contenant faisant l'objet d'un contrôle présente en tant qu'élément distinctif et en tant que défaut défini une étiquette appliquée de manière erronée voire ne présente aucune étiquette.

6. Procédé de test selon l'une quelconque des revendications précédentes, **caractérisé en ce que** le contenant faisant l'objet d'un contrôle présente en tant qu'élément distinctif ou en tant que défaut défini un bouchon appliqué de manière erronée voire ne présente aucun bouchon.

7. Procédé de test selon l'une quelconque des revendications précédentes, **caractérisé en ce que** l'installation de manutention de contentant ou son unité de contrôle sont mises en réseau avec l'unité fonctionnelle respective ou avec les unités fonctionnelles.

8. Procédé de test selon l'une quelconque des revendications précédentes, **caractérisé en ce que** le nombre de contenants faisant l'objet d'un contrôle est commandé de manière aléatoire, sachant qu'un seul ou plusieurs contenants faisant l'objet d'un contrôle présentant l'élément distinctif ou le défaut défini sont produits par l'unité fonctionnelle elle-même.

9. Procédé de test selon l'une quelconque des revendications précédentes, **caractérisé en ce que** l'unité fonctionnelle n'est pas désactivée au cours de la surveillance du dispositif d'inspection.

10. Procédé de test selon la revendication 8,
**caractérisé en ce que** le nombre aléatoire de contenants faisant l'objet d'un contrôle sont guidés le long du dispositif d'inspection, lequel génère un signal servant à trier des contenants faisant l'objet d'un contrôle respectivement défectueux.

11. Procédé de test selon l'une quelconque des revendications précédentes, **caractérisé en ce qu'**un nombre aléatoire de contenants faisant l'objet d'un contrôle sans élément distinctif ou sans un défaut défini sont guidés le long du dispositif d'inspection, lesquels restent dans le flux de contenants.

12. Procédé de test selon l'une quelconque des revendications précédentes, **caractérisé en ce qu'**un flux global de contenants faisant l'objet d'un contrôle est produit par la ou les unités fonctionnelles elles-mêmes, lequel présente un nombre aléatoire de contenants faisant l'objet d'un contrôle avec un défaut et sans défaut, sachant que le flux global de contenants faisant l'objet d'un contrôle est guidé le long dudit dispositif d'inspection, sachant que ce dernier produit un signal servant à trier les contenants faisant l'objet d'un contrôle avec défaut, sachant que les contenants faisant l'objet d'un contrôle sans défaut restent dans le flux de contenants faisant l'objet d'un contrôle.

13. Procédé de test selon l'une quelconque des revendications précédentes, **caractérisé en ce que** l'unité fonctionnelle est réinitialisée de manière automatique sur sa fonction normale après la production du nombre aléatoire de contenants faisant l'objet d'un contrôle présentant l'élément distinct ou le défaut défini.

14. Procédé de test selon l'une quelconque des revendications précédentes, **caractérisé en ce que** dans le cas de l'identification d'un défaut des mesures sont automatiquement prises afin de corriger le défaut et de minimiser le préjudice éventuel.

15. Procédé de test selon l'une quelconque des revendications précédentes, **caractérisé en ce que**, dans le cas de l'identification d'un défaut, une information est automatiquement délivrée afin de corriger le défaut éventuel.et de prendre automatiquement une mesure.
